(19) **Europäisches Patentamt / European Patent Office / Office européen des brevets**

(11) **EP 3 827 201 B1**

(12) **FASCICULE DE BREVET EUROPEEN**

(45) Date de publication et mention de la délivrance du brevet:
**07.09.2022 Bulletin 2022/36**

(21) Numéro de dépôt: **19742035.9**

(22) Date de dépôt: **18.07.2019**

(51) Classification Internationale des Brevets (IPC):
**F23C 99/00** *(2006.01)*

(52) Classification Coopérative des Brevets (CPC):
**F23C 99/00;** F23C 2900/99008; Y02E 20/34

(86) Numéro de dépôt international:
**PCT/EP2019/069366**

(87) Numéro de publication internationale:
**WO 2020/020739 (30.01.2020 Gazette 2020/05)**

(54) **INSTALLATION CLC COMPORTANT UN SEPARATEUR SOLIDE/SOLIDE AVEC DES MOYENS DE REPARTITION D'UN MELANGE GAZ-SOLIDE**

CLC-ANLAGE MIT EINEM FESTSTOFF-FESTSTOFF-SEPARATOR MIT MITTELN ZUR VERTEILUNG EINES GAS-FESTSTOFF-GEMISCHES

CLC FACILITY COMPRISING A SOLID/SOLID SEPARATOR WITH MEANS FOR DISTRIBUTING A GAS-SOLID MIXTURE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.07.2018 FR 1856808**

(43) Date de publication de la demande:
**02.06.2021 Bulletin 2021/22**

(73) Titulaires:
• **IFP Energies nouvelles**
  **92852 Rueil-Malmaison Cedex (FR)**
• **TotalEnergies OneTech**
  **92400 Courbevoie (FR)**

(72) Inventeurs:
• **BERTHOLIN, Stéphane**
  **92852 Rueil-Malmaison Cedex (FR)**
• **CLOUPET, Ann**
  **92852 Rueil-Malmaison Cedex (FR)**
• **GUILLOU, Florent**
  **92852 Rueil-Malmaison Cedex (FR)**
• **TILLAND, Airy**
  **92852 Rueil-Malmaison Cedex (FR)**
• **AMBLARD, Benjamin**
  **92852 Rueil-Malmaison Cedex (FR)**
• **TEBIANIAN, Sina**
  **92852 Rueil-Malmaison Cedex (FR)**
• **YAZDANPANAH, Mahdi**
  **76600 Le Havre (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
**WO-A1-2014/162075     WO-A2-2011/151535**
**WO-A2-2011/151537     JP-A- 2016 200 308**

## Description

### Domaine de l'invention

La présente invention concerne le domaine de la combustion de charges hydrocarbonées par oxydo-réduction en boucle chimique (CLC) opérant en lit fluidisé, et plus particulièrement la combustion en boucle chimique opérant en lit fluidisé de charges hydrocarbonées solides.

### Contexte général

La combustion en boucle chimique, ou procédé de Chemical Looping Combustion (CLC) dans sa terminologie anglo-saxonne, est un procédé consistant à mettre en œuvre des réactions d'oxydo-réduction d'une masse active, typiquement un oxyde métallique, pour décomposer la réaction de combustion en deux réactions successives : une première réaction d'oxydation de la masse active au contact d'un gaz oxydant, typiquement de l'air, et une deuxième réaction de réduction de la masse active au contact de la charge dont on souhaite la combustion. Dans le procédé CLC la masse active oxydo-réductrice joue ainsi le rôle de transporteur d'oxygène. Ce matériau solide se présente sous la forme de particules qui circulent selon différents régimes de transport en lit fluidisé dans la boucle. Ces particules sont oxydées au contact de l'air dans une première zone réactionnelle, appelée réacteur air. Elles sont ensuite transportées dans une seconde zone réactionnelle appelée réacteur fuel où elles sont mises en contact avec une charge hydrocarbonée solide (ex : charbon, le coke, le coke de pétrole ou « pet-coke » en anglais, la biomasse, les sables bitumineux, les déchets ménagers), liquide (ex. : fuel, bitume, diesel, essences, huile de schiste, etc.) ou gazeuse (ex. : gaz naturel, syngas, biogaz, gaz de schiste) dont on souhaite effectuer la combustion. L'oxygène transporté par les particules de matériau transporteur d'oxygène alimente la combustion de la charge. Il en résulte un effluent gazeux formé par la combustion de la charge et un flux de particules réduites. Les particules sont renvoyées au réacteur air pour y être ré-oxydées, fermant ainsi la boucle.

Le procédé CLC permet de produire de l'énergie (vapeur, électricité...) par récupération de la chaleur dégagée par les réactions de combustion tout en facilitant la capture du dioxyde de carbone ($CO_2$) émis lors de la combustion grâce à la production de fumées riches en $CO_2$. Le captage du $CO_2$ peut en effet se faire après condensation de la vapeur d'eau et compression des fumées, et celui-ci peut alors être stocké, par exemple dans un aquifère profond, ou être valorisé, par exemple en l'employant pour améliorer le rendement des exploitations pétrolières dans des procédés de récupération assistée du pétrole (EOR pour Enhanced Oil Recovery en anglais) ou de gaz (EGR pour Enhanced Gas Recovery en anglais).

Le procédé CLC peut également permettre la production de gaz de synthèse, voire d'hydrogène, en contrôlant la combustion et en mettant en œuvre les purifications requises en aval du procédé de combustion.

Un autre avantage résulte de ce mode de combustion : la production d'un flux très riche en azote, qui est l'air appauvri obtenu à l'issue de l'oxydation de la masse active dans le réacteur air. Selon le degré de pureté atteint, ce flux d'azote peut être valorisé dans diverses applications, notamment dans le domaine de l'industrie pétrolière. Il peut par exemple être utilisé en raffinerie en tant que gaz inerte dans différents procédés de raffinage du pétrole ou pour le traitement des eaux de production, ou en tant que gaz injecté dans le sous-sol dans des procédés EOR.

Lors de la combustion de charges hydrocarbonées solides telles que le charbon, il se forme généralement des particules d'imbrûlés, qui constituent alors une population de particules distincte de celle des particules du porteur d'oxygène.

Dans une mise en œuvre par lits fluidisés circulants, ces particules d'imbrûlés peuvent être entraînées du réacteur de combustion vers le réacteur d'oxydation du porteur d'oxygène, ce qui peut aboutir à la formation de $CO_2$ dans le réacteur d'oxydation et donc à des émissions de $CO_2$ en sortie du réacteur d'oxydation, ce qui n'est pas souhaité. D'autres problèmes peuvent survenir suite à l'entraînement des particules d'imbrûlés dans le réacteur d'oxydation, tels que la présence dans le flux d'air appauvri de composés néfastes pour l'environnement comme les SOx et les NOx issus de la combustion des imbrûlés par l'air, ou la pollution des réfractaires du réacteur air par les impuretés de la charge. En cas d'entraînement important, une trop forte concentration de ces composés nécessiterait la mise en place de procédés de traitement qui pénaliseraient l'intérêt économique de l'installation. Les particules d'imbrûlés peuvent également être entraînées avec les gaz de combustion hors du réacteur de combustion, ce qui n'est pas souhaité car elles constituent des éléments polluants pour l'atmosphère, et car cela pénalise le rendement énergétique du procédé.

Par particules d'imbrûlés on entend les particules de la charge hydrocarbonée solide (combustible) qui n'ont pas fait l'objet d'une combustion totale, et qui contiennent pas conséquent encore des composés hydrocarbonés. Les particules d'imbrûlés sont à distinguer des cendres qui sont essentiellement de nature minérale (cendres comportant typiquement les composés suivants : $SiO_2$, $Al_2O_3$, $Fe_2O_3$, $CaO$, $MgO$, $TiO_2$, $K_2O$, $Na_2O$, $SO_3$, $P_2O_5$).

Différents systèmes sont connus pour éviter l'entraînement de particules d'imbrûlés dans les fumées de combustion ou dans le réacteur d'oxydation du CLC.

La demande WO11151537 décrit un dispositif pour séparer les particules d'imbrûlés des particules du porteur d'oxygène contenues dans le mélange gazeux provenant de la zone de combustion d'une installation CLC. Ce dispositif qu'on peut appeler séparateur solide/solide, pour le distinguer des séparateurs classiques dits gaz/solide tels que des cyclones, est placé au-dessus de la zone de combustion, et comprend une enceinte comportant une partie supérieure opérant en phase diluée et une partie inférieure opérant en phase dense. Le mélange gazeux contenant les deux populations de particules est admis par une conduite d'admission débouchant dans la phase diluée de l'enceinte du séparateur solide/solide, et les particules les plus denses, e.g. les particules du porteur d'oxygène, sont évacuées par une conduite d'évacuation située en partie inférieure de l'enceinte alors que les particules les plus légères, e.g. les particules d'imbrûlés, sortent avec le gaz par une conduite de sortie située en partie supérieure de l'enceinte du séparateur. Les particules du porteur d'oxygène sont alors envoyées vers le réacteur d'oxydation, et les particules d'imbrûlés sont envoyées vers un séparateur gaz-solide, typiquement un cyclone, permettant de recycler les particules d'imbrûlés dans le réacteur de combustion. Le séparateur solide/solide selon WO11151537 présente de préférence une symétrie de révolution, l'enceinte étant cylindrique.

Sur le même principe, la demande WO11151535 décrit un procédé CLC mettant en œuvre un séparateur solide/solide similaire permettant de séparer les particules d'imbrûlés des particules du porteur d'oxygène contenues dans le mélange gazeux provenant de la zone de combustion d'une installation CLC. La demande WO11151535 divulgue notamment un séparateur solide/solide placé au-dessus d'une deuxième zone de combustion constituée d'un réacteur de forme allongée pénétrant dans l'enceinte su séparateur. Bien que la forme du séparateur ne soit pas précisée, certaines figures font implicitement référence à un équipement de forme cylindrique. Le séparateur solide/solide selon WO11151535 peut également comprendre un insert en forme de cône divergent en sortie du réacteur de combustion pénétrant dans l'enceinte du séparateur, afin de faciliter la répartition du mélange gazeux contenant des particules sur toute la section du séparateur.

Ces séparateurs solide/solide de forme cylindrique ne sont pas toujours adaptés à une mise en œuvre industrielle impliquant des équipements de grandes dimensions. En effet, les installations industrielles de grandes dimensions réalisant des opérations de combustion à haute température et à basse pression sont généralement réalisées avec une géométrie de section rectangulaire, comme c'est par exemple le cas des fours de vaporéformage, des fours de vapocraquage, des chaudières de combustion en lit fluidisé, des chaudières à charbon pulvérisé, etc. Cette configuration est notamment avantageuse pour simplifier l'installation des matériaux réfractaires disposés sur l'ensemble de la surface interne afin de protéger l'enceinte métallique des fortes températures. Cette configuration permet également de faciliter l'exploitation d'échelle des installations puisqu'il suffit de dupliquer un élément unitaire dans une dimension pour augmenter la capacité de l'équipement.

**Objectifs et résumé de l'invention**

Les demandeurs ont ainsi développé un nouveau séparateur solide/solide intégré à un réacteur de combustion d'une installation CLC, adapté à une mise en œuvre industrielle du CLC. Selon l'invention, la géométrie du séparateur solide/solide est parallélépipédique, tout comme celle du réacteur de combustion qu'il surmonte, et le séparateur comporte au moins une admission du mélange gaz/solide issu du réacteur de combustion de forme également parallélépipédique, l'admission étant équipée à son sommet de moyens de répartition dudit mélange dans l'enceinte qui s'étendent sur toute la longueur de ladite admission.

La présente invention vise notamment à fournir un séparateur solide/solide permettant de séparer efficacement les particules d'imbrûlés et les particules du porteur d'oxygène, tout en étant adapté à une mise en œuvre industrielle impliquant des équipements de grandes dimensions.

En outre, la présente invention vise à diminuer les coûts de fabrication du séparateur solide/solide et à simplifier sa réalisation, ainsi qu'augmenter la durée de vie du séparateur solide/solide.

Ainsi, pour atteindre au moins l'un des objectifs susvisés, parmi d'autres, la présente invention propose, selon un premier aspect, une installation de combustion en boucle chimique d'une charge hydrocarbonée solide générant des particules d'imbrûlés et mettant en œuvre des particules d'un solide porteur d'oxygène, ladite installation comportant :

- un réacteur de réduction opérant en lit fluidisé pour effectuer la combustion de ladite charge hydrocarbonée solide au contact des particules du solide porteur d'oxygène, ledit réacteur ayant une forme de parallélépipède ;
- un réacteur d'oxydation opérant en lit fluidisé pour oxyder les particules du solide porteur d'oxygène réduites provenant du réacteur de réduction par mise en contact avec un gaz oxydant;
- un séparateur solide/solide surmontant ledit réacteur de réduction pour séparer les particules du solide porteur d'oxygène des particules d'imbrûlés contenues dans le mélange gaz-solide issu dudit réacteur de réduction, ledit séparateur solide/solide comportant une enceinte de forme parallélépipédique comportant :
- une partie inférieure opérant en phase dense et une partie supérieure opérant en phase diluée ;
- au moins une admission de forme parallélépipédique pour le mélange gaz-solide provenant du réacteur de réduction, ladite admission débouchant dans la partie supérieure de l'enceinte et étant équipée à son sommet de moyens de répartition dudit mélange gaz-solide dans l'enceinte qui s'étendent sur toute la longueur de ladite admission ;

- au moins une évacuation placée dans la partie inférieure de l'enceinte;
- au moins une sortie située dans la partie supérieure de l'enceinte.

De préférence, l'installation comporte en outre un séparateur gaz-solide alimenté par la sortie de l'enceinte du séparateur solide/solide, le séparateur gaz-solide comprenant une conduite d'évacuation d'un gaz appauvri en particules légères d'imbrûlés, et une conduite de transport en communication avec le réacteur de réduction pour recycler les particules d'imbrûlés dans le réacteur de réduction.

Avantageusement, l'enceinte du séparateur solide/solide et son admission ont une forme de parallélépipède rectangle.

De préférence, le réacteur de réduction a une forme de parallélépipède rectangle.

L'enceinte du séparateur solide/solide peut comporter deux évacuations disposées au fond de l'enceinte de part et d'autre de l'admission.

De préférence, l'admission est centrée dans l'enceinte.

Selon un premier mode de réalisation, les moyens de répartition dudit mélange gaz-solide dans l'enceinte du séparateur solide/solide comportent une poutre de section en forme de V ouverte vers le sommet de l'enceinte.

Avantageusement, l'angle d'ouverture $\alpha$ de la section en forme de V de la poutre est compris entre 10° et 150°, et de préférence entre 10° et 90°, et encore plus préférentiellement entre 10° et 40°.

Avantageusement, le sommet de la poutre est à une distance H du sommet de l'admission comprise entre $0,5{\times}L_2$ et $5{\times}L_2$, de préférence entre $0,5{\times}L_2$ et $3{\times}L_2$ , et encore plus préférentiellement entre $0,5{\times}L_2$ et $1{\times}L_2$, $L_2$ étant la largeur de l'espace interne de l'admission.

Avantageusement, le sommet de la poutre a une largeur $L_1$ comprise entre $0,1{\times}L_2$ et $1,5{\times}L_2$, de préférence entre $0,2{\times}L_2$ et $1{\times}L_2$, et encore plus préférentiellement entre $0,3{\times}L_2$ et $0,7{\times}L_2$, $L_2$ étant la largeur de l'espace interne de l'admission.

Selon un deuxième mode de réalisation, le séparateur solide/solide comporte des moyens de refroidissement de l'admission et de la poutre.

De préférence, les moyens de refroidissement sont des tubes métalliques pour le passage d'un fluide caloporteur, lesdits tubes étant fixés sur une face externe des parois formant l'admission et sur une face interne des parois formant la poutre.

Selon un troisième mode de réalisation, les moyens de répartition dudit mélange gaz-solide dans l'enceinte du séparateur solide/solide comportent une plaque courbe de concavité tournée vers le bas de l'enceinte, la plaque courbe étant raccordée aux deux parois formant l'admission et étant munie d'au moins deux fentes positionnées de part et d'autre d'une partie centrale de ladite plaque courbe pour le passage du mélange gaz/solide et sa répartition vers la périphérie de l'enceinte.

Avantageusement, ce séparateur solide/solide comporte en outre des moyens de refroidissement de l'admission et de la plaque courbe, de préférence lesdits moyens de refroidissement étant des tubes métalliques pour le passage d'un fluide caloporteur, lesdits tubes étant fixés sur une face externe des parois formant l'admission et sur une face externe de la plaque courbe.

Selon un autre mode de réalisation, les moyens de répartition dudit mélange gaz-solide dans l'enceinte du séparateur solide/solide comportent une poutre cylindrique.

D'autres objets et avantages de l'invention apparaîtront à la lecture de la description qui suit d'exemples de réalisations particuliers de l'invention, donnés à titre d'exemples non limitatifs, la description étant faite en référence aux figures annexées décrites ci-après.

**Brève description des figures**

La figure 1 est un schéma de principe d'une installation CLC selon l'invention.
La figure 2 est une vue schématique en perspective d'un séparateur solide/solide de l'installation CLC selon un premier mode de réalisation.
La figure 3 est une vue schématique en coupe d'une partie du séparateur solide/solide selon le premier mode de réalisation illustré à la figure 2.
La figure 4 est une vue schématique en coupe d'une partie du séparateur solide/solide selon un deuxième mode de réalisation.
La figure5 est une vue schématique en perspective d'un séparateur solide/solide de l'installation CLC selon un troisième mode de réalisation.

La figure 6 est une vue schématique en coupe d'une partie d'un exemple de séparateur selon le premier mode de réalisation.

La figure 7 est un graphique représentant le débit de particules solides (Ds en abscisse) en fonction du débit de particules solides entraînées (Dse en ordonnée) pour un exemple de séparateur solide/solide selon l'art antérieur et différents exemples de séparateurs solide/solide selon l'invention.

Sur les figures, les mêmes références désignent des éléments identiques ou analogues.

**Description de l'invention**

L'objet de l'invention porte sur une installation CLC pour la combustion de charges hydrocarbonées solides génératrices de particules d'imbrûlés, pouvant être mise en œuvre à l'échelle industrielle pour de grandes capacités de production, et comportant un séparateur solide/solide pour séparer efficacement les particules du solide porteur d'oxygène des particules d'imbrûlés contenues dans le mélange gazeux sortant du réacteur de combustion. Le séparateur solide/solide, le réacteur de combustion, et l'admission du mélange gazeux dans le séparateur solide/solide ont une forme de parallélépipède, et l'admission comporte des moyens de dispersion du mélange gazeux dans le séparateur s'étendant le long du sommet de l'admission.

Dans la présente description, les expressions «matériau transporteur d'oxygène», «masse active oxydo-réductrice», et « porteur d'oxygène » sont équivalentes. La masse oxydo-réductrice est dite active en rapport avec ses capacités réactives, dans le sens où elle est apte à jouer son rôle de transporteur d'oxygène dans le procédé CLC en captant et relarguant de l'oxygène. L'expression abrégée «porteur d'oxygène» ou «masse active» ou le terme «solide porteur d'oxygène » pourront être également utilisés.

Il convient de noter que, de manière générale, les termes oxydation et réduction sont utilisés en relation avec l'état respectivement oxydé ou réduit de la masse active. Le réacteur d'oxydation, aussi appelé réacteur air, est celui dans lequel la masse oxydo-réductrice est oxydée et le réacteur de réduction, aussi appelé réacteur fuel ou réacteur de combustion, est le réacteur dans lequel la masse oxydo-réductrice est réduite. Les réacteurs opèrent en lit fluidisé et la masse active circule entre le réacteur d'oxydation et le réacteur de réduction. La technologie du lit fluidisé circulant est utilisée pour permettre le passage continu de la masse active de son état oxydé dans le réacteur d'oxydation à son état réduit dans le réacteur de réduction.

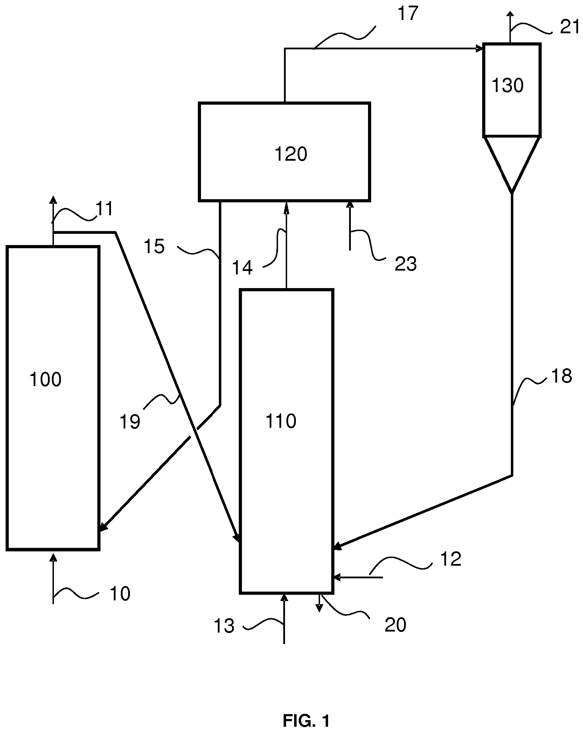

La figure 1 représente le principe de fonctionnement général d'une installation CLC selon l'invention.

Avant de décrire plus en détails son fonctionnement, l'installation CLC selon l'invention comporte les principaux éléments suivants:

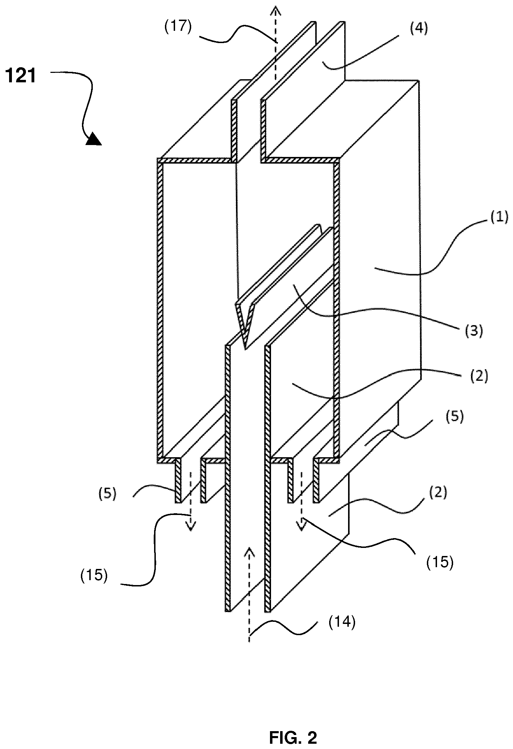

-   un réacteur de réduction 110 qui opère en lit fluidisé pour effectuer la combustion de la charge hydrocarbonée solide 12 au contact des particules du solide porteur d'oxygène 19, le réacteur 110 ayant une forme de parallélépipède ;
-   un réacteur d'oxydation 100 qui opère en lit fluidisé pour oxyder les particules du solide porteur d'oxygène réduites 15 provenant du séparateur solide-solide 120 surmontant le réacteur de réduction 110, par mise en contact avec un gaz oxydant 10 ;
-   le séparateur solide/solide 120 surmontant le réacteur de réduction 110 pour séparer les particules du solide porteur d'oxygène des particules d'imbrûlés contenues dans le mélange gaz-solide issu du réacteur de réduction 110.Selon l'invention, le séparateur solide/solide 120, représenté plus en détails dans les figures 2 à 5 décrites plus bas, comporte une enceinte de forme parallélépipédique comportant une partie inférieure opérant en phase dense et une partie supérieure opérant en phase diluée. Il comporte au moins une admission de forme parallélépipédique pour le mélange gaz-solide provenant du réacteur de réduction 110, cette admission débouchant dans la partie supérieure de l'enceinte et étant équipée à son sommet de moyens de répartition dudit mélange gaz-solide dans l'enceinte qui s'étendent sur toute la longueur de ladite admission. Le séparateur solide/solide comprend également au moins une évacuation placée dans la partie inférieure de l'enceinte, pour évacuer les particules du porteur d'oxygène, et au moins une sortie située dans la partie supérieure de l'enceinte pour évacuer les particules plus légères comportant les particules d'imbrûlés avec les gaz de combustion. L'enceinte du séparateur solide/solide 120 peut également comprendre une conduite d'alimentation en un gaz 23 provenant d'une source externe pour contribuer à la fluidisation et à la séparation solide/solide.

L'installation CLC peut aussi comporter un séparateur gaz-solide 130, typiquement de type cyclone, alimenté par la sortie de l'enceinte du séparateur solide/solide 120, ledit séparateur gaz-solide 130 comprenant une conduite d'évacuation d'un gaz 21 appauvri en particules légères d'imbrûlés, et une conduite de transport en communication avec le réacteur de réduction 110 pour recycler un flux 18 contenant les particules d'imbrûlés dans le réacteur de réduction 110.

Dans l'installation CLC, le porteur d'oxygène réduit sous forme de particules 15 est mis au contact du flux de gaz oxydant 10, typiquement de l'air, dans la zone réactionnelle 100 précédemment définie comme le réacteur air (ou réacteur d'oxydation). Il en résulte le flux appauvri en oxygène 11 (flux d'air appauvri) et le flux de particules ré-oxydées 19. Le flux de particules de porteur d'oxygène oxydé 19 est transféré dans la zone de réduction 110 précédemment défini comme le réacteur de réduction, encore appelé réacteur de combustion ou réacteur fuel. Le flux de particules 19 est mis au contact du combustible 12 qui est une charge hydrocarbonée solide. Il en résulte le mélange gaz/solide 14 comportant les produits de la combustion, c'est-à-dire les gaz issus de la combustion, majoritairement du $CO_2$ et de l'$H_2O$ si la combustion est complète, mais également de l'$H_2$ et du CO en cas de combustion incomplète, un complément gazeux pouvant aussi provenir du gaz de fluidisation 13 introduit dans le réacteur de réduction (par exemple du $CO_2$ recyclé et/ou de la vapeur d'eau), ainsi que les particules de porteur d'oxygène réduit, les particules d'imbrûlés et les cendres. Un conduit peut être positionné dans la partie inférieure du réacteur 110 pour extraire les cendres agglomérées entre elles 20 formées dans le réacteur 110. Dans un souci de simplification, la représentation de la figure 1 ne comprend pas les divers équipements pouvant faire partie de l'unité CLC ou pour l'échange de chaleur. De la même manière, la figure 1 ne représente pas de manière exhaustive tous les équipements possibles concernant la séparation ou les éventuelles recirculations de matière autour des réacteurs air et fuel. Seule est représentée la séparation des éléments compris dans l'effluent issu du réacteur de combustion 110, et décrit plus bas, et la recirculation d'une partie de ces éléments dans le réacteur de combustion.

Dans le réacteur de combustion 110, la charge hydrocarbonée solide 12 est mise en contact à co-courant avec la masse active oxydo-réductrice sous forme de particules 19 pour réaliser la combustion de ladite charge par réduction de la masse active oxydo-réductrice.

La masse active oxydo-réductrice $M_xO_y$, M représentant un métal, est réduite à l'état $M_xO_{y-2n-m/2}$, par l'intermédiaire de la charge hydrocarbonée $C_nH_m$, qui est corrélativement oxydée en $CO_2$ et $H_2O$, selon la réaction (1) ci-dessous, ou éventuellement en mélange CO + $H_2$ selon les proportions utilisées.

$$C_nH_m + M_xO_y \rightarrow n\ CO_2 + m/2\ H_2O + M_xO_{y-2n-m/2} \qquad (1)$$

La combustion de la charge 12 au contact de la masse active est réalisée à une température généralement comprise entre 600°C et 1400°C, préférentiellement entre 800°C et 1000°C. Le temps de contact varie selon le type de charge utilisée. Il varie typiquement entre 1 seconde et 20 minutes, par exemple de préférence entre 1 et 10 minutes pour une charge solide.

Le mélange gazeux 14 comprenant notamment les gaz issus de la combustion et les particules de la masse active et les particules d'imbrûlés est évacué au sommet de la zone de réduction 110 et introduit dans un séparateur solide/solide 120 qui permet de séparer les particules du porteur d'oxygène plus lourdes évacuées en fond du séparateur solide/solide 120, en totalité ou en partie par un flux 15, vers le réacteur d'oxydation 100, et les particules d'imbrûlés plus légères évacuées avec les gaz de combustion par le flux 17 dans la partie supérieure, de préférence au sommet, du séparateur solide/solide 120. La majeure partie des particules d'imbrûlés peut être séparée des gaz de combustion dans le séparateur gaz/solide 130 et peut être envoyée à nouveau dans le réacteur de combustion 110 par un flux 18. La description du fonctionnement du séparateur solide/solide 120 est décrite plus loin.

Dans le réacteur d'oxydation 100, la masse active est restaurée à son état oxydé $M_xO_y$ au contact de l'air 10, selon la réaction (2) ci-dessous, avant de retourner selon un flux 19 vers la réacteur de réduction 110, et après avoir été séparée de l'air appauvri en oxygène 11 évacué au sommet du réacteur d'oxydation 100.

$$M_xO_{y-2n-m/2} + (n+m/4)\ O_2 \rightarrow M_xO_y \qquad (2)$$

Où n et m représentent respectivement le nombre d'atomes de carbone et d'hydrogène ayant réagi avec la masse active dans le réacteur de combustion.

La température dans le réacteur d'oxydation est généralement comprise entre 600°C et 1400°C, préférentiellement entre 800 et 1000°C.

La masse active, passant alternativement de sa forme oxydée à sa forme réduite et inversement, décrit un cycle d'oxydo-réduction.

Les zones réactionnelles permettant la mise en œuvre des réactions de combustion en boucle chimique sont généralement constituées de lits fluidisés ou de lits fluidisés circulants, aussi appelés lits transportés.

Dans la présente invention, les charges hydrocarbonées traitées sont des charges hydrocarbonées solides, telles que le charbon, le coke, le pet-coke, la biomasse, les sables bitumineux, les déchets ménagers.

La masse oxydo-réductrice peut être composée d'oxydes métalliques, tels que par exemple des oxydes de Fe, Ti, Ni, Cu, Mn, Co, V, seuls ou en mélange, pouvant provenir de minerais (par exemple l'ilménite ou la pyrolusite) ou être synthétiques (par exemple des particules d'oxyde de cuivre supportées sur alumine $CuO/Al_2O_3$ ou des particules d'oxyde de nickel supportées sur alumine $NiO/Al_2O_4$, de préférence des particules d'oxyde de cuivre supportées sur alumine $CuO/Al_2O_3$), avec ou sans liant, et présente les propriétés d'oxydo-réduction requises et les caractéristiques nécessaires à la mise en œuvre de la fluidisation. La capacité de stockage en oxygène de la masse oxydo-réductrice est avantageusement comprise, suivant le type de matériau, entre 0,5 % et 15 % poids. Avantageusement, la quantité d'oxygène effectivement transférée par l'oxyde métallique est comprise entre 0,5 et 3 % poids, ce qui permet de n'utiliser qu'une fraction de la capacité totale de transfert d'oxygène, idéalement moins de 30 % de celle-ci afin de limiter les risques de vieillissement mécanique ou d'agglomération des particules. L'utilisation d'une fraction seulement de la capacité de transport en oxygène a également pour avantage que le lit fluidisé joue un rôle de ballast thermique et lisse ainsi les variations de températures sur le parcours du porteur d'oxygène.

La masse active est sous la forme de particules fluidisables, appartenant aux groupes A, B ou C de la classification de Geldart. A titre d'exemple, et de manière non limitative, les particules de la masse active oxydo-réductrice peuvent appartenir au groupe B de la classification de Geldart, et présenter une granulométrie telle que plus de 90 % des particules ont une taille comprise entre 100 $\mu$m et 500 $\mu$m, de préférence comprise entre 150 $\mu$m et 300 $\mu$m. De préférence, les particules de la masse active oxydo-réductrice ont une densité comprise entre 1 000 kg/m$^3$ et 5 000 kg/m$^3$ et préférentiellement entre 1200 kg/m$^3$ et 4 000 kg/m$^3$.

La masse active oxydo-réductrice peut subir une phase d'activation de manière à augmenter ses capacités réactives, pouvant consister en une phase de montée en température, de préférence progressive, et de préférence sous atmosphère oxydante (par exemple sous air).

Le réacteur de combustion 110 peut comprendre un lit fluidisé en phase dense ou en lit fluidisé transporté ou bien encore un agencement de lits constitués d'une phase dense et d'une phase de transport, tel que cela est par exemple décrit dans la demande WO11151537. Dans ce dernier cas le réacteur de combustion peut alors comprendre une partie supérieure rétrécie ce qui permet d'accélérer et de transporter le mélange gaz-particules sortant du réacteur de combustion.

Bien qu'un seul réacteur de combustion soit représenté, l'installation CLC peut comprendre deux réacteurs de combustion en série, notamment un premier réacteur opérant en phase dense, dans lequel la charge solide subit essentiellement une dévolatilisation des composés volatils, qui représentent généralement de 5 à 50% en poids de la charge solide selon son origine, et une gazéification au contact des particules de porteur d'oxygène 19, surmonté d'un deuxième réacteur assurant la combustion du mélange gazeux issu du premier réacteur opérant en lit fluidisé dilué, typiquement un réacteur de forme allongée dans lequel les gaz ont une vitesse superficielle plus élevée que dans la le premier réacteur, tel que cela est décrit dans la demande WO11151535. Selon une telle configuration, les conditions nominales dans le premier réacteur de réduction sont de préférence les suivantes : un temps de séjour moyen de la phase solide (combustible solide et porteur d'oxygène) compris entre 0,25 minute et 20 minutes, de préférence entre 2 et 10 minutes, une vitesse superficielle du gaz généralement comprise entre 0,3 et 3 m/s (aux conditions de réaction en sortie du premier réacteur), une concentration en porteur d'oxygène au moins égale à 10% en volume. Les conditions dans le deuxième réacteur de réduction sont de préférence les suivantes : un temps de séjour de la phase gazeuse généralement compris entre 1 seconde et 20 secondes, le flux de solide transporté compris entre 25 et 500 kg/s/m$^2$, préférentiellement compris entre 60 et 300 kg/s/m$^2$, une vitesse superficielle du gaz supérieure à 3 m/s et inférieure à 30 m/s, de préférence comprise entre 5 et 15 m/s (exprimée aux conditions), de façon à faciliter le transport de l'ensemble des particules tout en minimisant les pertes de charge de façon à optimiser le rendement énergétique du procédé. Dans ce deuxième réacteur de réduction l'écoulement est dilué et l'essentiel du volume est occupé par le gaz. Ainsi, le taux de vide (pourcentage du volume occupé par le gaz) est généralement supérieur à 90%, voire à 95%.

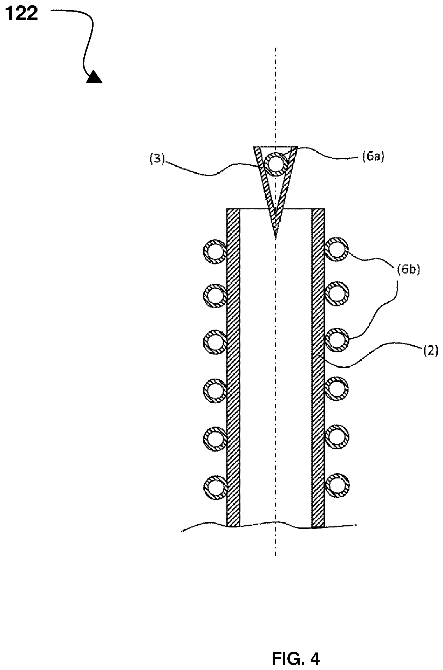

Dans l'installation CLC selon l'invention, le réacteur de combustion 110 surmonté du séparateur solide/solide 120 a une forme de parallélépipède, de préférence rectangle. Une telle géométrie de réacteur est bien adaptée à une mise en œuvre industrielle du CLC comportant des équipements de grande taille. Par grande taille, on entend des réacteurs donc la section s'exprime en dizaines de m$^2$, sur des hauteurs de plusieurs dizaines de mètres. Elle permet par exemple de faciliter l'augmentation d'échelle de l'installation CLC par une duplication possible du réacteur dans une dimension afin d'en augmenter sa capacité. En outre, cette géométrie particulière a également pour avantage de simplifier la mise en place possible de matériaux réfractaires sur l'ensemble de la surface interne afin de protéger des fortes températures l'enceinte métallique du réacteur. Par exemple, des couches de ciment réfractaire armé, ayant typiquement des épaisseurs généralement comprises entre 2 et 50 cm, généralement voisines de 20 cm, sur les faces internes exposées à l'écoulement et aux hautes températures permettent d'utiliser des aciers standards pour les parties externes du réacteur. Le matériau réfractaire utilisé pour former des couches sur les faces internes de la paroi métallique du réacteur peut également être des briques. Une autre configuration consiste en des parois comportant des tubes dans lesquels circulent un fluide caloporteur, comme par exemple de la vapeur d'eau, à l'image su système décrit sur la figure 4 pour le séparateur solide/solide 120.

Le séparateur solide/solide 120 de l'installation selon l'invention est décrit plus en détails plus loin, en relation avec les figures 2 à 5. Son principe de fonctionnement est le suivant :
Le mélange gaz/solide 14 est introduit par une admission débouchant dans l'enceinte du séparateur 120 sous la forme d'une phase diluée composée essentiellement de gaz (au moins 90% en volume).

Les particules solides transportées avec le gaz dans le mélange gaz/solide 14 sont essentiellement :

- les particules de porteur d'oxygène ayant cédé au moins une partie de leur oxygène lors de leur passage dans le réacteur de combustion 110;
- les particules de combustible solide imbrûlées, ou particules d'imbrûlés;
- éventuellement les cendres volantes, éléments incombustibles résultant de la combustion totale des particules de combustible solide et pour lesquelles le temps de séjour dans le réacteur de combustion a été suffisant.

De par la vitesse imposée du gaz dans le séparateur solide/solide 120, les particules lourdes sédimentent dans la partie inférieure du séparateur solide/solide 120 et sont extraites (flux 15) par au moins une évacuation prévue dans la partie inférieure de l'enceinte, alors que les particules légères sont entraînées dans la partie supérieure du séparateur solide/solide 120 et sont évacuées (flux 17) par une sortie située dans la partie supérieure de l'enceinte, par exemple au sommet de l'enceinte. Les particules lourdes sont essentiellement constituées par les particules du porteur d'oxygène à recycler, et les particules légères sont essentiellement constituées par les particules d'imbrûlés à recycler vers la zone de combustion, et éventuellement par les cendres volantes. Au sein du séparateur solide/solide 120 la vitesse superficielle de l'écoulement gazeux est supérieure à la vitesse terminale de chute des particules de combustible imbrûlées pour permettre leur entraînement avec le gaz, par exemple 3 fois supérieure à la vitesse terminale de chute des particules de combustible imbrûlées. Ainsi, en soumettant le mélange de particules issu du réacteur de combustion 110 à un écoulement gazeux de vitesse imposée, il est possible de procéder à une séparation "rapide" entre les particules lourdes et les particules légères. Par séparation rapide, on entend une séparation s'opérant en moins de 1 minute et préférentiellement en moins de 20 secondes, cette durée correspondant au temps de séjour des particules légères dans la phase diluée du séparateur 120. La phase diluée présente généralement un taux de solide généralement inférieur à 5%, voire inférieur à 1% (vol.).

Le séparateur 120 comprend une enceinte de forme parallélépipédique, de préférence rectangle, avec au moins une admission dudit mélange de forme également parallélépipédique, de préférence rectangle, au moins une évacuation située en partie inférieure de l'enceinte et au moins une sortie située en partie supérieure de l'enceinte, les paramètres d'admission et d'évacuation/sortie étant choisis pour créer dans l'enceinte une phase dense en partie inférieure et une phase diluée en partie supérieure, et dans lequel l'admission débouche dans la phase diluée.

Ainsi, la séparation est réalisée dans la phase diluée du séparateur solide/solide 120 de façon à obtenir la meilleure efficacité de séparation possible.

On peut définir l'efficacité de séparation par la formule:

X= quantité de particules d'imbrûlés entraînées avec le gaz / quantité totale de particules d'imbrûlés dans le mélange de particules entrant dans le séparateur.

Une efficacité de séparation généralement supérieure à 70%, voire supérieure à 80%, peut être obtenue avec la mise en œuvre d'un tel séparateur solide/solide 120.

De par cette bonne efficacité de séparation, il est possible d'optimiser le taux de captage en $CO_2$ du procédé, celui-ci étant défini par le ratio quantité de $CO_2$ émis au niveau de la zone de combustion /quantité totale de $CO_2$ émis dans la boucle CLC. Ainsi, le taux de captage peut être supérieur à 90%. Une telle efficacité de séparation, influant sur le recyclage des imbrûlés dans le réacteur de combustion, peut permettre de limiter le temps de séjour de la charge dans le réacteur de combustion, ce qui peut autoriser des conceptions différentes du réacteur de combustion, notamment une zone en lit fluidisé en phase dense plus compacte.

De manière préférée, l'écoulement gazeux à vitesse imposée est induit entièrement par le mélange gaz/solide 14 provenant du réacteur de combustion 110, mais il est également possible d'ajuster la vitesse par injection complémentaire d'un gaz 23 provenant d'une source externe, qui peut également contribuer à la fluidisation d'une phase dense accumulant les particules sédimentées.

De préférence, la vitesse superficielle du gaz dans la phase diluée de l'enceinte du séparateur 120 est fixée à une valeur généralement comprise entre 30 et 300% de la vitesse terminale de chute moyenne des particules de porteur d'oxygène, de préférence comprise entre 50 et 150%, et encore de préférence comprise entre 75 et 125%.

La vitesse terminale de chute moyenne est obtenue à partir de la formule (*):

$$Vt = \left(\frac{4d_p(\rho_s - \rho_g)g}{3\rho_g C_D}\right)^{1/2}$$

où: $d_p$ est le diamètre moyen des particules

$\rho_s$ est la masse volumique des particules (kg/m$^3$)
$\rho_g$ est la masse volumique du gaz (kg/m$^3$)
$C_D$ le coefficient de traînée

(*): extraite de Fluidization Engineering, Butterworth-Heinemann, Daizo Kunii, Octave Levenspiel, p.80).

Le flux gazeux 17 donc comprend les gaz de combustion et les particules les plus légères qui sont majoritairement des particules d'imbrûlés et éventuellement des cendres volantes, une fraction minoritaire de ces particules les plus légères pouvant être constituée par des particules de porteurs d'oxygène, notamment des fines du porteur d'oxygène produite par attrition. Ce flux peut être envoyé dans un séparateur gaz-solide 130, par exemple un cyclone, afin de récupérer les particules solides contenues dans le flux gazeux 17 et de les recycler dans le réacteur de combustion 110 par un flux 18, après élimination éventuelle des cendres volantes par élutriation en lit fluidisé par exemple. Dans ce cas la sortie de l'enceinte du séparateur solide/solide 120 alimente le séparateur gaz-solide 130 qui comprend une conduite d'évacuation du gaz 21 appauvri en particules légères d'imbrûlés et une conduite de transport en communication avec le réacteur de réduction 110 pour recycler les particules d'imbrûlés dans le réacteur de réduction 110. Bien qu'un seul étage de séparation gaz-solide soit représenté à la figure 1, d'autres séparateurs gaz-solide, de type cyclones ou filtres par exemple, peuvent être prévus en aval du séparateur gaz/solide 130 pour effectuer un dépoussiérage plus poussé des effluents de combustion.

La figure 2 est un schéma d'un séparateur solide/solide selon un premier mode de réalisation.

La séparateur solide/solide 121 comporte une enceinte 1 en forme de parallélépipède rectangle comprenant une admission 2 du mélange gaz-solide 14 composé de particules solides du porteur d'oxygène, de particules solides d'imbrûlés, de cendres, et de gaz, essentiellement de la vapeur d'eau, du $CO2$, et du gaz de synthèse (CO et $H_2$) en faible quantité, ledit mélange 14 provenant du réacteur de combustion 110 situé en dessous du séparateur solide/solide 121.

L'admission 2 a une forme de parallélépipède, de préférence rectangle. Elle est plus précisément composée par deux parois en vis-à-vis, de préférence sensiblement parallèles, s'étendant de préférence sur sensiblement toute la longueur de l'enceinte 1. L'enceinte 1 peut également comporter plusieurs admissions 2 pour un tel mélange gaz-solide. La ou les admissions 2 sont raccordées dans leur partie inférieure au sommet du réacteur de combustion.

L'admission est de préférence centrée dans l'enceinte 1. Elle peut également être décentrée, sans toutefois que ce décentrage soit trop important afin de conserver une répartition du mélange gaz-solide la plus uniforme possible dans l'enceinte 1 à la sortie de l'admission 2.

La hauteur entre le sommet de l'admission et le sommet de l'enceinte est par exemple comprise entre 0,5 et 2 fois la hauteur de désengagement, préférentiellement entre 1 et 1,2 fois la hauteur de désengagement. La hauteur de désengagement étant la hauteur à partir de laquelle la concentration de solide entraîné dans la phase gaz est constante

L'admission pénètre dans l'enceinte sur une profondeur axiale préférablement comprise entre $0,7 \times L_2$ et $5 \times L_2$, plus préférentiellement entre $1,5 \times L_2$ et $3 \times L_2$, $L_2$ étant la largeur de l'admission, c'est-à-dire la largeur de l'espace interne de l'admission 2, qui est l'espace interne formé entre les deux parois constitutives de l'admission 2 étant en vis-à-vis.

L'enceinte 1 du séparateur solide/solide 120 comporte également dans sa partie supérieure une sortie 4 pour un autre mélange gaz-solide 17 essentiellement composé du gaz évoqué précédemment, de la majeure partie des particules solides d'imbrûlés, des cendres, et d'une faible partie des particules du porteur d'oxygène. La sortie 4 est de préférence positionnée au sommet de l'enceinte. La sortie 4 peut également être positionnée sur une paroi latérale dans la partie supérieure de l'enceinte, permettant d'évacuer le mélange gaz/solide 17 latéralement, et faciliter par exemple le raccordement au séparateur solide-solide 130. Le mélange 17 sortant par la sortie 4 est de préférence dirigé vers un séparateur gaz-solide 130, par exemple un cyclone, tel que déjà expliqué plus haut. L'enceinte 1 peut également comporter plusieurs sorties pour un tel mélange gaz-solide 17.

La sortie 4 a de préférence une forme de parallélépipède, de préférence rectangle, comme représenté. Dans ce cas elle s'étend de préférence sur sensiblement toute la longueur de l'enceinte. La sortie 4 peut cependant avoir toute autre forme géométrique, par exemple cylindrique pour faciliter le raccordement au séparateur solide-solide 130.

La sortie 4 est de préférence centrée dans l'enceinte 1. Alternativement, elle peut être décentrée.

L'enceinte 1 du séparateur solide/solide 120 comporte deux évacuations 5 disposées au fond de l'enceinte 1 de part et d'autre de l'admission 2. Elles permettent à un mélange de solides 15 composé majoritairement de particules du porteur d'oxygène et d'une faible fraction de particules solides d'imbrûlés solides, de préférence une teneur en particules solides d'imbrûlés solides inférieure à 30 %, préférentiellement inférieure à 20%, de la teneur initiale dans le mélange gaz-solide arrivant par l'admission 2, d'être évacué et dirigé vers le réacteur d'oxydation 100 où les particules du porteur d'oxygène sont à nouveau oxydées au contact d'un gaz oxydant, e.g. de l'air. Une seule évacuation ou plus de deux évacuations peuvent être alternativement prévues dans l'enceinte 1 pour évacuer le mélange de solides 15.

Les évacuations 5 ont de préférence une forme de parallélépipède, de préférence rectangle. Elles s'étendent de préférence sur sensiblement toute la longueur de l'enceinte. Alternativement, elles peuvent avoir une autre forme géométrique, par exemple cylindrique.

Dans une configuration où l'admission 2, la sortie 4 et les évacuations 5 ont une forme de parallélépipède rectangle, tel que représenté à la figure 2, l'admission 2, la sortie 4 et les évacuations 5 comportent chacune deux parois latérales s'étendant sur sensiblement toute la longueur de l'enceinte 1, et sont de préférence sensiblement parallèles entre elles.

L'objectif du séparateur solide/solide est d'abord de minimiser la concentration en particules solides d'imbrûlés dans le mélange de solides sortant par l'évacuation 5 en fond de séparateur 120, pour limiter l'entraînement des imbrûlés vers le réacteur d'oxydation et assurer ainsi un taux de captage du $CO_2$ élevé, puis de minimiser la concentration en particules de porteur d'oxygène dans le mélange gaz-solide 17 envoyé à la sortie 4 située dans la partie supérieure du séparateur solide/solide 120. L'efficacité du séparateur solide/solide repose donc sur une séparation efficace de ces deux populations de particules solides dans l'enceinte 1, dont le fonctionnement a déjà été décrit plus haut.

Selon l'invention, l'admission 2 est équipée à son sommet par des moyens de répartition 3 dudit mélange gaz-solide dans l'enceinte 1 qui s'étendent sur toute la longueur de l'admission 2. Ces moyens sont disposés au sommet de l'admission 2 afin d'améliorer la répartition du mélange gaz-solide 14 sur toute la section de l'enceinte 1 du séparateur solide/solide 120. Cette meilleure distribution du mélange gaz-solide à son entrée dans l'enceinte améliore la séparation gravitaire des particules solides. Par un effet de déviation du mélange gaz-liquide lié à la présence des moyens de répartition 3, les particules les plus denses, i.e. celles du porteur d'oxygène, sont ralenties en s'approchant des parois latérales de l'enceinte 1 et retombent vers le bas de l'enceinte 1. Les particules les plus légères, comportant les particules d'imbrûlés, conservent une vitesse d'entraînement suffisante pour atteindre le haut de l'enceinte 1 et sortir avec les gaz par la sortie 4.

Les moyens de répartition 3 eux-mêmes provoquent également un ralentissement des particules par contact des particules avec lesdits moyens, jouant en quelque sorte un rôle de « brise-jet », ce qui améliore de la même manière la séparation gravitaire des particules du porteur d'oxygène et des imbrûlés dans l'enceinte 1 du séparateur.

Selon le premier mode de réalisation tel que représenté à la figure 2, ces moyens de répartition du mélange gaz-solide 14 sont formés par une poutre 3 de section en forme de V ouverte vers le sommet de l'enceinte 1.

La poutre peut être fixée à l'admission, ou à un autre support tel que les parois de l'enceinte, par tout moyen de fixation connu de l'homme du métier résistant aux conditions opératoires du CLC, par exemple par des pattes de fixation ou tout autre élément de liaison fixe soudé entre les parois de l'admission ou de l'enceinte et la poutre. Les éléments de fixation de la poutre ne sont pas représentés sur la figure 2 par souci de simplification.

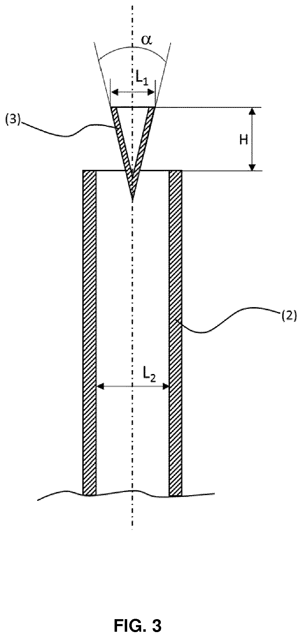

La figure 3 représente une vue détaillée d'une partie du séparateur solide/solide 120 montrant la disposition de la poutre 3 par rapport à l'admission 2.

La géométrie et la position de la poutre 3 sont notamment définies par les paramètres suivants :

- l'angle d'ouverture $\alpha$ de la section en forme de V de la poutre, formé entre les deux parois formant la poutre de section en forme de V,
- la largeur $L_1$ de la poutre 3, définie au sommet de la poutre où elle est la plus grande du fait de la section en forme en V ouverte vers le sommet de l'enceinte 1,
- la distance H entre le sommet de la poutre, et le sommet de l'admission 2, plus précisément entre le plan horizontal au sommet de la poutre 3 et le plan horizontal au sommet de l'admission 2.

Ces deux derniers paramètres, $L_1$ et H, peuvent s'exprimer en fonction de la largeur $L_2$ de l'admission 2. La largeur $L_2$ de l'admission est la largeur de l'espace interne de l'admission 2, c'est-à-dire l'espace interne formé entre les deux parois en vis-à-vis de l'admission 2.

Avantageusement, la section en forme de V de la poutre 3 forme de préférence un angle d'ouverture $\alpha$ compris entre 10° et 150°, plus préférentiellement entre 10° et 90°, et encore plus préférentiellement compris entre 10° et 50°. Par exemple, l'angle d'ouverture est de 30°. Une géométrie avec un angle d'ouverture a faible, de préférence compris entre 10° et 50° est préférée car elle permet de fournir une surface de contact des parois de la poutre avec les particules entraînées la plus tangentielle possible, ce qui permet notamment de limiter l'intensité des chocs mécaniques exercés sur les particules du porteur d'oxygène, et par conséquent leur usure par attrition.

Avantageusement, la distance H est comprise entre $0,5{\times}L_2$ et $5{\times}L_2$, de préférence entre $0,5{\times}L_2$ et $3{\times}L_2$, et encore plus préférentiellement entre $0,5{\times}L_2$ et $1{\times}L_2$. Par exemple, la distance H est de $0,9{\times}L_2$.

Avantageusement, la largeur $L_1$ est comprise entre $0,1{\times}L_2$ et $1,5{\times}L_2$, de préférence entre $0,2{\times}L_2$ et $1{\times}L_2$, et encore plus préférentiellement entre $0,3{\times}L_2$ et $0,7{\times}L_2$. Par exemple, la largeur $L_1$ est de $0,5{\times}L_2$.

Selon une variante, la poutre 3 peut être pleine, et présenter ainsi une section en forme de triangle.

La poutre 3 peut être formée d'une seule pièce, ou par l'assemblage de plusieurs pièces, par exemple une succession de plaques longitudinales fixées les unes aux autre pour former la poutre avec une section en V.

Les matériaux utilisés pour réaliser l'enceinte du séparateur solide/solide et ses éléments constitutifs (admission(s), évacuation(s), sortie(s), moyens de répartition etc.) peuvent être choisis parmi les matériaux réfractaires, par exemple de type béton réfractaire, brique réfractaire ou céramique, les aciers haute température, par exemple de type Hastelloy ®, Incoloy ®, Inconel ® ou Manaurite ®, ou des aciers conventionnels, par exemple de type acier inoxydable ou acier au carbone refroidis selon la variante présentée à la figure 4 et décrite ci-dessous, ou une combinaison de ces matériaux

La figure 4 représente une vue détaillée d'une partie d'un séparateur solide/solide 122 selon un deuxième mode de réalisation de l'invention. La vue est centrée sur la poutre 3 et l'admission 2. Le séparateur solide/solide 122 est en tout point identique à celui selon le premier mode de réalisation, à l'exception du fait qu'il comprend en plus des moyens de refroidissement de l'admission 2 et de la poutre 3.

La géométrie du séparateur solide/solide 122, en particulier l'admission 2 de forme parallélépipédique, s'étendant de préférence sur sensiblement toute la longueur de l'enceinte parallélépipédique, ainsi que la poutre en forme de V surmontant ladite admission 2, permettent l'intégration de moyens de refroidissement des matériaux formant ces éléments du séparateur.

De préférence, les moyens de refroidissement comportent des tubes métalliques 6a et 6b pour le passage d'un fluide caloporteur, les tubes étant fixés, par exemple soudés, sur une face externe des parois formant l'admission 2 et sur une face interne des parois formant la poutre 3.

Par face externe des parois de l'admission 2 on entend la face en contact avec l'espace interne de l'enceinte 1. Par face interne des parois de la poutre 3, on entend la face en contact avec l'espace intérieur formé entre les deux parois en V formant la poutre 3.

La poutre 3 comporte par exemple au moins un tube 6a disposé entre les parois qui forme la poutre en V. Cette configuration permet de ne pas gêner le passage du mélange gaz-solide à la sortie de l'admission 2.

L'admission 2 comporte au moins une rangée de tubes 6b, par exemple 6 rangées de tubes 6b, sur la face externe de chacune des deux parois qui forme l'admission. Les tubes 6b peuvent par exemple être reliés entre eux pour former un serpentin sur chaque paroi, ou être indépendants.

Alternativement, les tubes 6a et 6b peuvent être assemblés entre eux pour former des parois refroidissantes et être en même temps des éléments de structure formant la poutre 3 et/ou l'admission 2.

Les tubes sont alimentés par un fluide caloporteur à plus basse température que celle opérée dans le séparateur solide/solide, permettant un refroidissement des internes par échange thermique, de manière à les maintenir à une température notamment inférieure aux températures de fluage.

Avantageusement, de la vapeur d'eau est utilisée comme fluide caloporteur.

De tels moyens de refroidissement permettent d'une part l'utilisation de matériaux plus conventionnels pour la fabrication de ces éléments internes du séparateur solide/solide, tels que l'acier, à la place d'alliages réfractaires coûteux et complexes à mettre en œuvre pouvant être requis pour résister aux températures très élevées d'opération du séparateur solide/solide, généralement supérieures à 900°C et potentiellement supérieures à 1000°C, qui sollicitent fortement les matériaux et peuvent entraîner des problèmes de fluage des matériaux métalliques conventionnels.

D'autre part, de tels moyens de refroidissement permettent de fiabiliser l'opération du séparateur solide/solide sur le long terme, et donc de l'installation CLC, avec des contraintes mécaniques attendues, liées aux fortes températures imposées par le CLC, moins importantes.

Un tel mode de réalisation est donc particulièrement bien adapté à une mise en œuvre industrielle impliquant des équipements de grandes dimensions généralement coûteux, par une économie sur les coûts de fabrication du séparateur solide/solide et par une économie des coûts opérationnels liée à une opérabilité plus fiable sur le long terme.

Dans le cas où de la vapeur d'eau est utilisé en tant que fluide caloporteur, un autre avantage de ce deuxième mode de réalisation réside dans la possibilité de produire de l'énergie par une exploitation de la vapeur surchauffée produite par l'échange thermique opérée grâce à ces moyens de refroidissement.

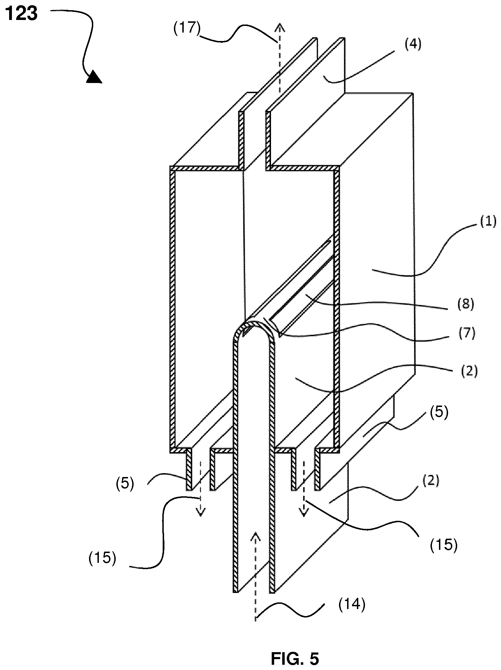

La figure 5 est un schéma d'un séparateur solide/solide selon un troisième mode de réalisation. Le séparateur solide/solide 123 est identique à celui du premier mode de réalisation, à l'exception des moyens de répartition du mélange gaz-solide dans l'enceinte.

Selon ce troisième mode de réalisation, les moyens de répartition du mélange gaz-solide comportent une plaque courbe 7 de concavité tournée vers le bas de l'enceinte 1, la plaque courbe 7 étant raccordée aux deux parois formant l'admission 2 et étant munie d'au moins deux fentes 8 positionnées de part et d'autre d'une partie centrale de ladite plaque courbe 7 et s'étendant le long du sommet de l'admission 2 pour le passage du mélange gaz/solide et sa répartition vers la périphérie de l'enceinte 1. Les fentes 8 s'étendent de préférence sur sensiblement toute la longueur du sommet de l'admission. Le mélange gaz-solide 14 entrant dans l'enceinte 1 est ainsi réparti de façon similaire à ce qui a été décrit pour le premier mode de réalisation avec la poutre 3.

Selon un quatrième mode de réalisation, non représenté, le séparateur solide/solide 123 comporte en outre des moyens de refroidissement de l'admission 2 et de la plaque courbe 7. Il s'agit d'une variante du troisième mode de réalisation.

Comme pour le séparateur 122 selon le deuxième mode de réalisation représenté sur la figure 4, ces moyens de refroidissement sont de préférence des tubes métalliques pour le passage d'un fluide caloporteur, de préférence de la vapeur d'eau. Les tubes sont fixés sur une face externe des parois formant l'admission 2 et sur une face externe de la plaque courbe 7. La face externe de la plaque courbe est la face en contact avec l'espace interne de l'enceinte 1. Par opposition, la face interne de la plaque courbe 7 est positionnée du côté de l'espace interne formé dans l'admission 2. Les tubes fixés à l'admission 2 peuvent être disposés de manière similaire à la configuration décrite en relation avec la figure 3.

Cette configuration présente des avantages similaires à ceux décrit pour le deuxième mode de réalisation de l'invention.

Selon un autre mode de réalisation non représenté, le séparateur solide/solide 120 est en tout point identique à celui du premier mode de réalisation décrit en relation avec la figure 2, à l'exception des moyens de répartition du mélange gaz-solide dans l'enceinte, qui ne sont pas une poutre de section en forme de V ouverte vers le sommet de l'enceinte 1, mais sont formés par une poutre cylindrique.

Selon ce mode de réalisation, la géométrie et la position de la poutre sont définies essentiellement par les deux paramètres suivants: le diamètre externe D1 de la poutre, et la distance H entre le sommet de la poutre, et le sommet de l'admission du séparateur solide/solide, plus précisément entre le plan horizontal au sommet de la poutre et le plan horizontal au sommet de l'admission. Ces derniers paramètres, D1 et H, peuvent s'exprimer en fonction de la largeur $L_2$ de l'admission, de manière identique aux paramètres L1 et H selon le premier mode de réalisation :
Avantageusement, la distance H est comprise entre $0{,}5 \times L_2$ et $5 \times L_2$, de préférence entre $0{,}5 \times L_2$ et $3 \times L_2$, et encore plus préférentiellement entre $0{,}5 \times L_2$ et $1 \times L_2$. Par exemple, la distance H est de $0{,}9 \times L_2$.

Avantageusement, le diamètre $D_1$ est compris entre $0{,}1 \times L_2$ et $1{,}5 \times L_2$, de préférence entre $0{,}2 \times L_2$ et $1 \times L_2$, et encore plus préférentiellement entre $0{,}3 \times L_2$ et $0{,}7 \times L_2$. Par exemple, le diamètre $D_1$ est de $0{,}5 \times L_2$.

Un tel séparateur solide/solide peut également comprendre des moyens de refroidissement similaires à ceux décrits en relation avec la figure 4, notamment des tubes métalliques pour le passage d'un fluide caloporteur fixés, par exemple soudés, sur une face externe des parois formant l'admission, ou soudés entre eux pour former directement les parois de l'admission, et des tubes métalliques pour le passage d'un fluide caloporteur pouvant être fixés à l'intérieur de la poutre cylindrique ou être remplacés par la poutre cylindrique elle-même dans laquelle peut circuler un fluide caloporteur.

**Exemple**

L'exemple qui suit vise à montrer l'efficacité des moyens de dispersion du mélange gaz/solide dans le séparateur solide/solide de l'installation CLC selon l'invention, en comparaison avec un séparateur solide/solide dépourvu de tels moyens.

Selon cet exemple, différentes configurations selon l'invention sont testées, toutes mettant en œuvre une poutre de section en forme de V ouverte vers le sommet de l'enceinte du séparateur solide/solide, conformément au premier mode de réalisation.

Les résultats montrent également l'influence de l'angle d'ouverture de la poutre en V, ainsi que de la position de la poutre en V au-dessus du sommet de l'admission.

Différentes géométries de poutres en forme de V sont évaluées à différentes hauteurs par rapport au sommet de l'admission 2, au sein d'une maquette dite « froide », c'est-à-dire une installation non réactive opérant à température ambiante, équivalente en taille à un séparateur solide/solide d'une puissance de 1 MWth, de section 0,3 m², de hauteur totale 4 mètres et de hauteur d'admission d'1 mètre.

Au total six configurations C1 à C6 sont testées et comparées à une configuration C7 d'un séparateur solide/solide selon l'art antérieur sans poutre.

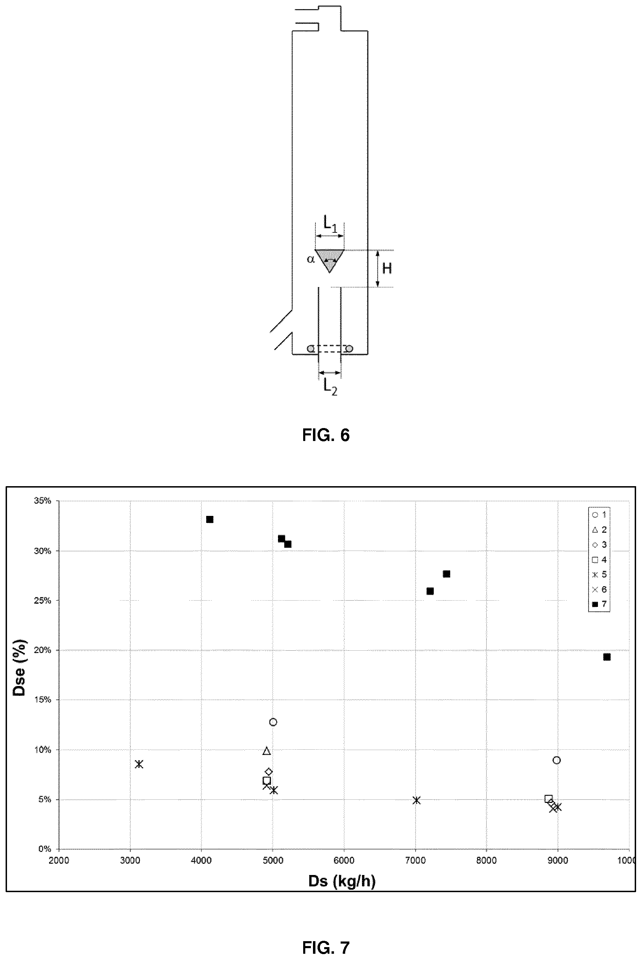

La figure 6 schématise le montage réalisé et les principaux paramètres géométriques pris en compte, dont les valeurs sont résumées dans le tableau ci-dessous.

|  | **C1** | **C2** | **C3** | **C4** | **C5** | **C6** |
|---|---|---|---|---|---|---|
| Angle α (°) | 30 | 30 | 30 | 30 | 60 | 120 |
| H (mm) | 1200 ($5 \times L_2$) | 720 ($3 \times L_2$) | 216 ($0.9 \times L_2$) | 216 ($0.9 \times L_2$) | 216 ($0.9 \times L_2$) | 216 ($0.9 \times L_2$) |
| $L_1$ (mm) | 170 | 170 | 170 | 240 | 240 | 240 |

La distance $L_2$ est fixée à 240 mm.

Ces configurations C1 à C7 sont évaluées pour différents débits de solide sous forme de particules variant de 3000 à 9000 kg/h. Le solide est composé d'ilménite, qui est un minerai associant le titane et le fer, dont l'essentiel de la population a un diamètre compris entre 100 et 150 $\mu$m (diamètre de Sauter dsv = 113 $\mu$m) pour une densité de grain de 4750 kg/m³.

Les résultats sont illustrés dans le graphique de la figure 7 qui donne le débit de particules solides (Ds en abscisse, en kg/h) en fonction du débit de particules solides entraînées (Dse en ordonnée, en %) pour un exemple de séparateur solide/solide selon l'art antérieur C7, référencé 7 sur la légende du graphique, et différents exemples de séparateurs solide/solide selon l'invention C1 à C6, référencés 1 à 6 sur la légende du graphique

L'efficacité de la séparation solide/solide est évaluée sur la base du pourcentage de particules solides entraînées vers la sortie 4 du séparateur solide/solide (rapport de la quantité de particules entraînées avec le gaz / quantité totale de particules dans le mélange de particules entrant dans le séparateur).

L'efficacité la plus grande correspond au pourcentage le moins élevé.

Comme le montre la figure 7, on constate que la présence d'un poutre en forme de V au sommet de l'admission 2 permet d'améliorer significativement l'efficacité, d'un facteur 3 à 6 suivant les géométries considérées.

On constate également qu'une efficacité équivalente est atteinte pour la majorité des configurations testées. Seules les géométries avec une poutre en V ayant un angle d'ouverture $\alpha$ de 30° et une faible largeur $L_1$ (170mm) présentent une sensibilité en fonction de l'élévation H de la poutre. En revanche, des performances équivalentes sont atteintes lorsque la poutre est localisée au plus près du sommet de l'admission 2 du mélange gaz-solide ($H=0.9 \times L_2$).

## Revendications

1. Installation de combustion en boucle chimique d'une charge hydrocarbonée solide générant des particules d'imbrûlés et mettant en œuvre des particules d'un solide porteur d'oxygène, ladite installation comportant :

   - un réacteur de réduction (110) opérant en lit fluidisé pour effectuer la combustion de ladite charge hydrocarbonée solide au contact des particules du solide porteur d'oxygène (19), ledit réacteur ayant une forme de parallélépipède ;
   - un réacteur d'oxydation (100) opérant en lit fluidisé pour oxyder les particules du solide porteur d'oxygène réduites provenant du réacteur de réduction (110) par mise en contact avec un gaz oxydant (10) ;
   - un séparateur solide/solide (120, 121, 123) surmontant ledit réacteur de réduction (110) pour séparer les particules du solide porteur d'oxygène des particules d'imbrûlés contenues dans le mélange gaz-solide issu dudit réacteur de réduction (110), ledit séparateur solide/solide comportant une enceinte (1) de forme parallélépipédique comportant :

      - une partie inférieure opérant en phase dense et une partie supérieure opérant en phase diluée ;
      - au moins une admission (2) de forme parallélépipédique pour le mélange gaz-solide provenant du réacteur de réduction (110), ladite admission débouchant dans la partie supérieure de l'enceinte (1) et étant équipée à son sommet de moyens (3, 7, 8) de répartition dudit mélange gaz-solide dans l'enceinte qui s'étendent sur toute la longueur de ladite admission ;
      - au moins une évacuation (5) placée dans la partie inférieure de l'enceinte (1) ;
      - au moins une sortie (4) située dans la partie supérieure de l'enceinte (1).

2. Installation selon la revendication 1, comportant en outre un séparateur gaz-solide (130) alimenté par la sortie (4) de l'enceinte (1) du séparateur solide/solide (120, 121, 123), ledit séparateur gaz-solide (130) comprenant une conduite d'évacuation d'un gaz (21) appauvri en particules légères d'imbrûlés, et une conduite de transport en communication avec le réacteur de réduction (110) pour recycler un flux (18) contenant les particules d'imbrûlés dans le réacteur de réduction (110).

3. Installation selon l'une quelconque des revendications précédentes, dans laquelle l'enceinte (1) du séparateur solide/solide (120, 121, 123) et son admission (2) ont une forme de parallélépipède rectangle.

4. Installation selon l'une quelconque des revendications précédentes, dans laquelle le réacteur de réduction (110) a une forme de parallélépipède rectangle.

5. Installation selon l'une quelconque des revendications précédentes, dans laquelle l'enceinte (1) du séparateur solide/solide (120, 121, 123) comporte deux évacuations (5) disposées au fond de l'enceinte (1) de part et d'autre de l'admission (2).

6. Installation selon l'une quelconque des revendications précédentes, dans laquelle l'admission (2) est centrée dans l'enceinte (1).

7. Installation selon l'une quelconque des revendications précédentes, dans laquelle les moyens de répartition dudit mélange gaz-solide dans l'enceinte (1) du séparateur solide/solide (120, 121, 123) comportent une poutre (3) de section en forme de V ouverte vers le sommet de l'enceinte (1).

**8.** Installation selon la revendication 7, dans laquelle l'angle d'ouverture $\alpha$ de la section en forme de V de ladite poutre (3) est compris entre 10° et 150°, et de préférence entre 10° et 90°, et encore plus préférentiellement entre 10° et 40°.

**9.** Installation selon l'une quelconque des revendications 7 et 8, dans laquelle le sommet de ladite poutre (3) est à une distance H du sommet de l'admission (2) comprise entre $0,5 \times L_2$ et $5 \times L_2$, de préférence entre $0,5 \times L_2$ et $3 \times L_2$, et encore plus préférentiellement entre $0,5 \times L_2$ et $1 \times L_2$, $L_2$ étant la largeur de l'espace interne de l'admission (2).

**10.** Installation selon l'une quelconque des revendications 7 à 9, dans laquelle le sommet de ladite poutre (3) a une largeur $L_1$ comprise entre $0,1 \times L_2$ et $1,5 \times L_2$, de préférence entre $0,2 \times L_2$ et $1 \times L_2$, et encore plus préférentiellement entre $0,3 \times L_2$ et $0,7 \times L_2$, $L_2$ étant la largeur de l'espace interne de l'admission (2).

**11.** Installation selon l'une quelconque des revendications 7 à 10, dans laquelle le séparateur solide/solide comporte en outre des moyens de refroidissement de l'admission (2) et de la poutre (3).

**12.** Installation selon la revendication 11, dans laquelle les moyens de refroidissement sont des tubes métalliques pour le passage d'un fluide caloporteur, lesdits tubes étant fixés sur une face externe des parois formant l'admission (2) et sur une face interne des parois formant la poutre (3).

**13.** Installation selon l'une quelconque des revendications 1 à 6, dans laquelle les moyens de répartition dudit mélange gaz-solide dans l'enceinte (1) du séparateur solide/solide (120, 121, 123) comportent une plaque courbe (7) de concavité tournée vers le bas de l'enceinte (1), ladite plaque courbe (7) étant raccordée aux deux parois formant l'admission (2) et étant munie d'au moins deux fentes (8) positionnées de part et d'autre d'une partie centrale de ladite plaque courbe (7) pour le passage du mélange gaz/solide et sa répartition vers la périphérie de l'enceinte (1).

**14.** Installation selon la revendication 13, dans laquelle le séparateur solide/solide comporte en outre des moyens de refroidissement de l'admission (2) et de la plaque courbe (7), de préférence lesdits moyens de refroidissement étant des tubes métalliques pour le passage d'un fluide caloporteur, lesdits tubes étant fixés sur une face externe des parois formant l'admission (2) et sur une face externe de la plaque courbe (7).

**15.** Installation selon l'une quelconque des revendications 1 à 6, dans laquelle les moyens de répartition dudit mélange gaz-solide dans l'enceinte (1) du séparateur solide/solide (120) comportent une poutre cylindrique.

**Patentansprüche**

**1.** Anlage zur Verbrennung eines feststofflichen kohlenwasserstoffartigen Beschickungsguts im chemischen Schleifenreaktor, wobei unverbrannte Partikel erzeugt werden und Partikel eines sauerstofftragenden Feststoffs zum Einsatz kommen, wobei die Anlage Folgendes umfasst:

- einen Reduktionsreaktor (110), der als Wirbelschicht betrieben wird, um die Verbrennung des feststofflichen kohlenwasserstoffartigen Beschickungsguts im Kontakt mit den Partikeln des sauerstofftragenden Feststoffs (19) durchzuführen, wobei der Reaktor die Form eines Parallelflachs hat;
- einen Oxidationsreaktor (100), der als Wirbelschicht betrieben wird, um die reduzierten Partikel des sauerstofftragenden Feststoffs, welche aus dem Reduktionsreaktor (110) stammen, durch Inkontaktbringen mit einem oxidierenden Gas (10) zu oxidieren;
- eine Feststoff/Feststoff-Trennungsvorrichtung (120, 121, 123), die sich oberhalb des Reduktionsreaktors (110) befindet, um die Partikel des sauerstofftragenden Feststoffs von den unverbrannten Partikeln zu trennen, wie sie in der Gas-Feststoff-Mischung enthalten sind, welche aus dem Reduktionsreaktor (110) stammt, wobei die Feststoff/Feststoff-Trennungsvorrichtung einen Hohlraum (1) mit der Form eines Parallelflachs aufweist, der Folgendes aufweist:

- einen unteren Abschnitt, der in dichter Phase betrieben wird, und einen oberen Abschnitt, der in verdünnter Phase betrieben wird;
- mindestens eine Zuleitung (2) mit der Form eines Parallelflachs für die Gas-Feststoff-Mischung, welche aus dem Reduktionsreaktor (110) stammt, wobei die Zuleitung in den oberen Abschnitt des Hohlraums (1) einmündet und an ihrer Spitze mit Mitteln (3, 7, 8) zum Verteilen der Gas-Feststoff-Mischung in dem Hohlraum versehen ist, die sich über die gesamte Länge der Zuleitung erstrecken;
- mindestens eine Abführung (5), die im unteren Abschnitt des Hohlraums (1) angeordnet ist;

- mindestens eine Austrittsöffnung (4), die sich im oberen Abschnitt des Hohlraums (1) befindet.

2. Anlage nach Anspruch 1, die darüber hinaus eine Gas/Feststoff-Trennungsvorrichtung (130) aufweist, welche über die Austrittsöffnung (4) des Hohlraums (1) der Feststoff/Feststoff-Trennungsvorrichtung (120, 121, 123) gespeist wird, wobei die Gas/Feststoff-Trennungsvorrichtung (130) eine Leitung zum Abführen eines Gases (21), welches an unverbrannten Leichtpartikeln abgereichert ist, und eine Förderleitung umfasst, welche mit dem Reduktionsreaktor (110) in Verbindung steht, um einen Stoffstrom (18), welcher die unverbrannten Partikel enthält, in den Reduktionsreaktor (110) zurückzuführen.

3. Anlage nach einem beliebigen der vorhergehenden Ansprüche, wobei der Hohlraum (1) der Feststoff/Feststoff-Trennungsvorrichtung (120, 121, 123) und dessen Zuleitung (2) quaderförmig sind.

4. Anlage nach einem beliebigen der vorhergehenden Ansprüche, wobei der Reduktionsreaktor (110) quaderförmig ist.

5. Anlage nach einem beliebigen der vorhergehenden Ansprüche, wobei der Hohlraum (1) der Feststoff/Feststoff-Trennungsvorrichtung (120, 121, 123) zwei Abführungen (5) aufweist, die beiderseits der Zuleitung (2) am Boden des Hohlraums (1) angeordnet sind.

6. Anlage nach einem beliebigen der vorhergehenden Ansprüche, wobei die Zuleitung (2) in dem Hohlraum (1) mittig angeordnet ist.

7. Anlage nach einem beliebigen der vorhergehenden Ansprüche, wobei die Mittel zum Verteilen der Gas/Feststoff-Mischung in dem Hohlraum (1) der Feststoff/Feststoff-Trennungsvorrichtung (120, 121, 123) einen Träger (3) mit V-förmigem Querschnitt aufweisen, welcher zur Spitze des Hohlraums (1) hin offen ist.

8. **Anlage nach Anspruch 7, wobei der Öffnungswinkel** $\alpha$ **des** V-förmigen Querschnitts des Trägers (3) im Bereich von 10° bis 150°, vorzugsweise von 10° bis 90° und noch stärker bevorzugt von 10° bis 40° liegt.

9. Anlage nach einem beliebigen der Ansprüche 7 und 8, wobei die Spitze des Trägers (3) einen Abstand H von der Spitze der Zuleitung (2) aufweist, der im Bereich von $0,5 \times L_2$ bis $5 \times L_2$, vorzugsweise von $0,5 \times L_2$ bis $3 \times L_2$, und noch stärker bevorzugt von $0,5 \times L_2$ bis $1 \times L_2$ liegt, wobei $L_2$ die Breite des Innenraums der Zuleitung (2) ist.

10. Anlage nach einem beliebigen der Ansprüche 7 bis 9, wobei die Spitze des Trägers (3) eine Breite $L_1$ aufweist, die im Bereich von $0,1 \times L_2$ bis $1,5 \times L_2$, vorzugsweise von $0,2 \times L_2$ bis $1 \times L_2$, und noch stärker bevorzugt von $0,3 \times L_2$ bis $0,7 \times L_2$ liegt, wobei $L_2$ die Breite des Innenraums der Zuleitung (2) ist.

11. Anlage nach einem beliebigen der Ansprüche 7 bis 10 wobei die Feststoff/Feststoff-Trennungsvorrichtung darüber hinaus Mittel zum Kühlen der Zuleitung (2) und des Trägers (3) aufweist.

12. Anlage nach Anspruch 11, wobei es sich bei den Kühlmitteln um Metallröhren zum Durchleiten eines Wärmeträgerfluids handelt, wobei die Röhren an einer Außenseite der Wände, aus welchen die Zuleitung (2) gebildet ist, und auf einer Innenseite der Wände befestigt sind, aus welchen der Träger (3) gebildet ist.

13. Anlage nach einem beliebigen der Ansprüche 1 bis 6, wobei die Mittel zum Verteilen der Gas/Feststoff-Mischung in dem Hohlraum (1) der Feststoff/Feststoff-Trennungsvorrichtung (120, 121, 123) eine gekrümmte Platte (7) aufweisen, deren konkave Seite dem unteren Bereich des Hohlraums (1) zugewandt ist, wobei die gekrümmte Platte (7) an die beiden Wände anschließt, aus welchen die Zuleitung (2) gebildet ist, und mit mindestens zwei Spalten (8) versehen ist, welche beiderseits eines mittigen Abschnitts der gekrümmten Platte (7) angeordnet sind, um die Gas/Feststoff-Mischung hindurchzuleiten und zum Randbereich des Hohlraums (1)) hin zu verteilen.

14. Anlage nach Anspruch 13, wobei die Feststoff/Feststoff-Trennungsvorrichtung darüber hinaus Mittel zum Kühlen der Zuleitung (2) und der gekrümmten Platte (7) aufweist, wobei es sich bei dem Kühlmitteln vorzugsweise um Metallröhren zum Durchleiten eines Wärmeträgerfluids handelt, wobei die Röhren an einer Außenseite der Wände, aus welchen die Zuleitung (2) gebildet ist, und an einer Außenseite der gekrümmten Platte (7) befestigt sind.

15. Anlage nach einem beliebigen der Ansprüche 1 bis 6, wobei die Mittel zum Verteilen der Gas/Feststoff-Mischung in dem Hohlraum (1) der Feststoff/Feststoff-Trennungsvorrichtung (120) einen zylindrischen Träger aufweisen.

## Claims

1. Plant for the chemical looping combustion of a solid hydrocarbon feedstock generating particles of unburnt residues and employing particles of an oxygen-carrying solid, said plant comprising:

   - a reduction reactor (110) operating as fluidized bed in order to carry out the combustion of said solid hydrocarbon feedstock in contact with the particles of the oxygen-carrying solid (19), said reactor having a parallelepiped shape;
   - an oxidation reactor (100) operating as fluidized bed in order to oxidize the reduced particles of the oxygen-carrying solid originating from the reduction reactor (110) by bringing into contact with an oxidizing gas (10);
   - a solid/solid separator (120, 121, 123) surmounting said reduction reactor (110) in order to separate the particles of the oxygen-carrying solid from the particles of unburnt residues contained in the gas/solid mixture resulting from said reduction reactor (110), said solid/solid separator comprising a chamber (1) of parallelepipedal shape comprising:

     - a lower part operating as dense phase and an upper part operating as dilute phase;
     - at least one inlet (2) of parallelepipedal shape for the gas/solid mixture originating from the reduction reactor (110), said inlet emerging in the upper part of the chamber (1) and being equipped at its top with means (3, 7, 8) for distribution of said gas/solid mixture in the chamber which extend over the entire length of said inlet;
     - at least one drain (5) placed in the lower part of the chamber (1);
     - at least one outlet (4) located in the upper part of the chamber (1).

2. Plant according to Claim 1, additionally comprising a gas/solid separator (130) fed by the outlet (4) of the chamber (1) of the solid/solid separator (120, 121, 123), said gas/solid separator (130) comprising a pipe for discharge of a gas (21) depleted in light particles of unburnt residues, and a transportation pipe in communication with the reduction reactor (110) in order to recycle a stream (18) containing the particles of unburnt residues to the reduction reactor (110).

3. Plant according to either one of the preceding claims, in which the chamber (1) of the solid/solid separator (120, 121, 123) and its inlet (2) have a rectangular parallelepiped shape.

4. Plant according to any one of the preceding claims, in which the reduction reactor (110) has a rectangular parallelepiped shape.

5. Plant according to any one of the preceding claims, in which the chamber (1) of the solid/solid separator (120, 121, 123) comprises two drains (5) positioned at the bottom of the chamber (1) on either side of the inlet (2).

6. Plant according to any one of the preceding claims, in which the inlet (2) is centered in the chamber (1).

7. Plant according to any one of the preceding claims, in which the means for distribution of said gas/solid mixture in the chamber (1) of the solid/solid separator (120, 121, 123) comprise a beam (3) of V-shaped section open toward the top of the chamber (1).

8. Plant according to Claim 7, in which the opening angle $\alpha$ of the V-shaped section of said beam (3) is between 10° and 150°, and preferably between 10° and 90°, and more preferentially still between 10° and 40°.

9. Plant according to either one of Claims 7 and 8, in which the top of said beam (3) is at a distance H from the top of the inlet (2) of between $0.5 \times L_2$ and $5 \times L_2$, preferably between $0.5 \times L_2$ and $3 \times L_2$ and more preferentially still between $0.5 \times L_2$ and $1 \times L_2$, $L_2$ being the width of the internal space of the inlet (2).

10. Plant according to any one of Claims 7 to 9, in which the top of said beam (3) has a width $L_1$ of between $0.1 \times L_2$ and $1.5 \times L_2$, preferably between $0.2 \times L_2$ and $1 \times L_2$ and more preferentially still between $0.3 \times L_2$ and $0.7 \times L_2$, $L_2$ being the width of the internal space of the inlet (2).

11. Plant according to any one of Claims 7 to 10, in which the solid/solid separator additionally comprises means for cooling the inlet (2) and the beam (3).

**12.** Plant according to Claim 11, in which the cooling means are metal tubes for the passage of a heat-exchange fluid, said tubes being fixed to an external face of the walls forming the inlet (2) and to an internal face of the walls forming the beam (3).

**13.** Plant according to any one of Claims 1 to 6, in which the means for distribution of said gas/solid mixture in the chamber (1) of the solid/solid separator (120, 121, 123) comprise a curved plate (7) with a concavity facing the bottom of the chamber (1), said curved plate (7) being connected to the two walls forming the inlet (2) and being provided with at least two slots (8) positioned on either side of a central part of said curved plate (7) for the passage of the gas/solid mixture and its distribution toward the periphery of the chamber (1).

**14.** Plant according to Claim 13, in which the solid/solid separator additionally comprises means for cooling the inlet (2) and the curved plate (7), preferably said cooling means being metal tubes for the passage of a heat-exchange fluid, said tubes being fixed to an external face of the walls forming the inlet (2) and to an external face of the curved plate (7).

**15.** Plant according to any one of Claims 1 to 6, in which the means for distribution of said gas/solid mixture in the chamber (1) of the solid/solid separator (120) comprise a cylindrical beam.

FIG. 1

121

FIG. 2

FIG. 3

FIG. 4

123

FIG. 5

**FIG. 6**

**FIG. 7**

**EP 3 827 201 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 11151537 A

- WO 11151535 A